# FASCICULE DE BREVET EUROPEEN

(11) **EP 0 907 857 B1**
(45) Date de publication et mention de la délivrance du brevet: **28.02.2001**
(21) Numéro de dépôt: 97931840.9
(22) Date de dépôt: 01.07.1997
(51) Int. Cl.: F16L 33/02

(54) **COLLIER DE SERRAGE FILAIRE**
SCHLAUCHSCHELLE.
WIRE CLAMPING COLLAR

(30) Priorité: 01.07.1996 FR 9608167; 22.11.1996 FR 9614285
(43) Date de publication de la demande: 14.04.1999
(73) Titulaire: Etablissements CAILLAU, 92130 Issy-les-Moulineaux (FR)
(72) Inventeur: DETABLE, Pascal, F-41130 Gievres (FR); ANDRE, Michel, F-41200 Romorantin-Lanthenay (FR)
(74) Mandataire: Intes, Didier Gérard André
(86) Numéro de dépôt international: FR9701171
(87) Numéro de publication internationale: WO9800665

(56) Documents cités:
- FR-A- 2 553 153

## Description

La présente invention concerne un collier de serrage, constitué par un fil semi-rigide enroulé sur lui-même pour former au moins une spire.

Par "fil semi-rigide", on entend désigner un fil réalisé dans un matériau possédant une mémoire de forme pouvant permettre au fil de rester enroulé sur lui-même au repos, ainsi qu'une certaine élasticité propre. Un tel matériau est par exemple du métal (acier à ressort, acier inoxydable, acier trempé, ou encore tout type de matériau métallique convenable) ou tout autre matériau, notamment un matériau synthétique, possédant les caractéristiques mécaniques lui conférant une certaine rigidité.

Le fil présente une section transversale dont les dimensions sont comparables dans toutes les directions et restent très nettement inférieures à sa longueur. Classiquement, la section est circulaire ou sensiblement circulaire.

Des colliers de serrage sont communément utilisés pour serrer un objet sur un autre, par exemple pour serrer un tuyau en caoutchouc sur un embout tubulaire rigide.

On connaît déjà, par le document FR-A-2 553 153, un collier filaire constitué par un fil semi-rigide enroulé sur lui-même pour former deux spires dont une première extrémité est munie d'une boucle d'accrochage, tandis qu'une deuxième extrémité est repliée sur elle-même pour former un prolongement comprenant une surface d'accrochage pour cette boucle. La boucle d'accrochage est formée par un repli en U formant un pont entre les deux spires, tandis que les prolongements des deux spires présentent eux-mêmes deux petites spires d'accrochage dont l'extrémité comporte la surface d'accrochage.

Dans l'une des variantes proposées par ce document, dans laquelle les prolongements sont chacun enroulés sur deux spires d'accrochage successives, il est possible d'obtenir une position dans laquelle la boucle d'accrochage se trouve à l'intérieur de la première spire d'accrochage, ce qui permet d'obtenir un pré-accrochage. Pour parvenir à cette situation, il faut considérablement diminuer le diamètre du collier puisqu'il faut faire passer la boucle d'accrochage sous l'extrémité libre des prolongements, c'est-à-dire au-delà de sa position normale d'accrochage, et la faire rentrer dans la première spire d'accrochage des prolongements. Ensuite, pour parvenir à la position d'accrochage à partir de la position de pré-accrochage, il faut diminuer le diamètre du collier et veiller à ce que la boucle d'accrochage vienne correctement se positionner à l'extrémité libre des prolongements.

Ce collier présente plusieurs inconvénients. Premièrement, il n'est pas facile d'obtenir la position de pré-accrochage puisque l'amenée de la boucle d'accrochage sous les spires d'accrochage ne correspond pas à un mouvement naturel. Deuxièmement, en position fermée du collier, l'organe de retenue pour la boucle d'accrochage est constitué par la périphérie externe courbe de la deuxième spire d'accrochage. Ce seul maintien n'est pas sécurisant et il existe un risque fort de décrochage du collier.

La présente invention s'applique à un collier de serrage du type précité, constitué par un film semi-rigide enroulé sur lui-même pour former au moins une spire qui a une première extrémité munie d'une boucle d'accrochage formée dans un pli du fil sensiblement transversal au plan de la spire et une deuxième extrémité repliée sur elle-même vers l'extérieur, pour former un prolongement s'étendant sensiblement dans le plan de la spire.

L'invention vise à remédier aux inconvénients de l'art antérieur précité en proposant un pré-accrochage plus facile à mettre en oeuvre et un accrochage plus sécurisant.

Ce but est atteint grâce au fait que le prolongement comporte un pli d'accrochage formant un décrochement qui, considéré dans le sens allant vers l'extrémité libre du prolongement, est dirigé de manière à se rapprocher de la spire, et au fait que ce prolongement comporte un pli de pré-accrochage situé entre l'extrémité du prolongement raccordé à la spire et le pli d'accrochage, le pli de pré-accrochage étant également dirigé de manière à se rapprocher de la spire.

On comprend que grâce à ces dispositions, la position de pré-accrochage est obtenue de manière tout à fait naturelle, en faisant simplement passer le diamètre de la spire du diamètre qu'elle présente à l'état ouvert jusqu'au diamètre de pré-accrochage, qui est supérieur au diamètre du collier à l'état serré. Lors de cette manipulation, il n'est aucunement nécessaire d'amener à un quelconque moment le diamètre du collier à une valeur inférieure à son diamètre de serrage. De plus, le pré-accrochage comme l'accrochage correspondent à deux positions sûres, puisque dans l'un et l'autre cas, la boucle d'accrochage coopère avec la base d'un pli formant un décrochement.

La fabrication est simple puisque, en plus de l'étape classique d'enroulement du fil métallique sur une ou plusieurs spires pour réaliser la périphérie du collier, elle comprend seulement des étapes de pliage pour réaliser, d'une part, la boucle d'accrochage et, d'autre part, le prolongement équipé des plis d'accrochage et de pré-accrochage. Le fil peut être plus ou moins écroui en vue de lui conférer une certaine élasticité et en vue de donner leurs formes définitives à la boucle d'accrochage et au prolongement.

Grâce à la réalisation "filaire" du collier, sa surface de portée sur l'élément à serrer est limitée. De ce fait, et du fait du serrage positif du collier, le taux de compression du matériau dans lequel est réalisé l'objet à serrer est donc localement très élevé dans la zone d'appui du collier sur cet objet, ce qui permet de favoriser l'étanchéité sur des matériaux durs tels que des thermoplastiques.

Avantageusement, le pli de pré-accrochage est raccordé à la spire par une première rampe sensiblement rectiligne inclinée vers l'extrémité libre du prolongement par rapport à un rayon de la spire passant par l'extrémité du prolongement raccordé à ladite spire. Ainsi, pour passer de l'état ouvert à l'état de pré-accrochage, la boucle d'accrochage "monte" naturellement sur cette rampe. Il est également avantageux que le pli d'accrochage soit raccordé au pli de pré-accrochage par une deuxième rampe sensiblement rectiligne, également inclinée vers l'extrémité libre du prolongement par rapport à un rayon de la spire passant par l'extrémité du prolongement qui est raccordée à cette spire. Cette rampe permet également une "montée" naturelle de la boucle d'accrochage pour passer de la position de pré-accrochage à la position d'accrochage.

L'indication selon laquelle la deuxième extrémité est repliée sur elle-même vers l'extérieur signifie que le prolongement se trouve du côté de la périphérie externe du collier, par opposition à sa périphérie interne.

Le fil peut être enroulé sur une seule spire entre une première extrémité située au voisinage de la boucle d'accrochage et une deuxième extrémité située à l'extrémité libre du prolongement.

Le collier selon ce mode de réalisation est fabriqué de manière extrêmement simple avec une quantité de métal réduite.

Cependant, pour de nombreuses applications, il est avantageux que le fil soit enroulé sur deux spires sensiblement parallèles et analogues. Dans ce cas, un pont entre les deux spires peut être formé dans la région des boucles d'accrochage, ou encore dans celle des extrémités libres des prolongements. Ce collier est pratiquement équivalent à un collier plus classique, réalisé à partir d'une bande de métal enroulée sur elle-même. Sa largeur est déterminée par la dimension du pont entre les deux spires et il présente les avantages précités dus au fait que sa surface de portée sur l'élément inséré est limitée.

L'invention sera bien comprise et ses avantages apparaîtront mieux à la lecture de la description détaillée qui suit, de modes de réalisation représentés à titre d'exemples non limitatifs.

La description se réfère aux dessins annexés, sur lesquels :
- la figure 1 montre en élévation latérale un collier filaire conforme à l'invention. en position de pré-accrochage,
- la figure 2 est une vue analogue à la figure 1 montrant un collier en position d'accrochage,
- la figure 3 est une vue de dessus de la figure 2, pour un collier à deux spires,
- la figure 4 est une vue de côté de la figure 2, également pour un collier de deux spires,
- la figure 5 est une vue analogue à la figure 4 mais pour un collier à une seule spire, et
- la figure 6 montre une perspective partielle d'un collier à deux spires selon une variante de réalisation.

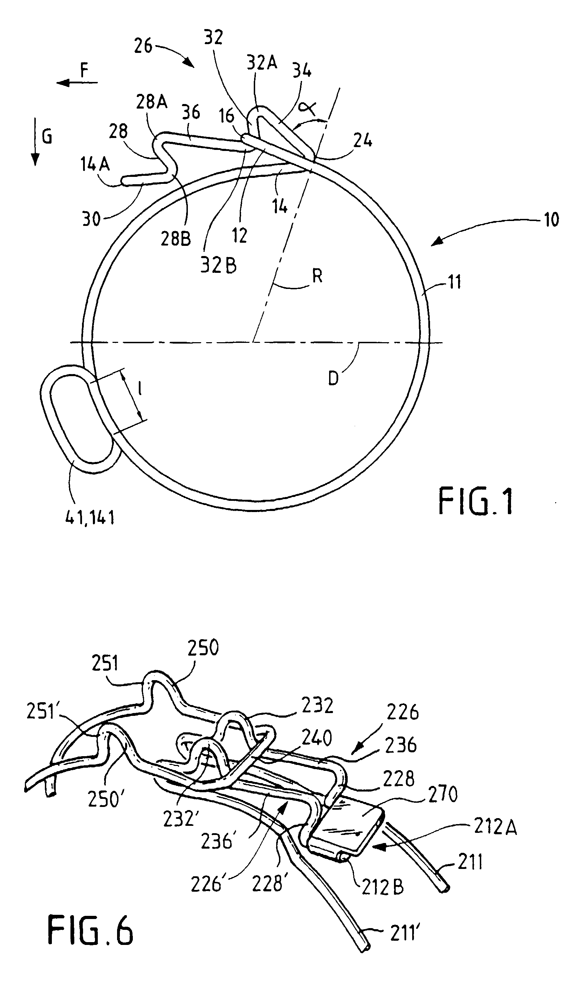

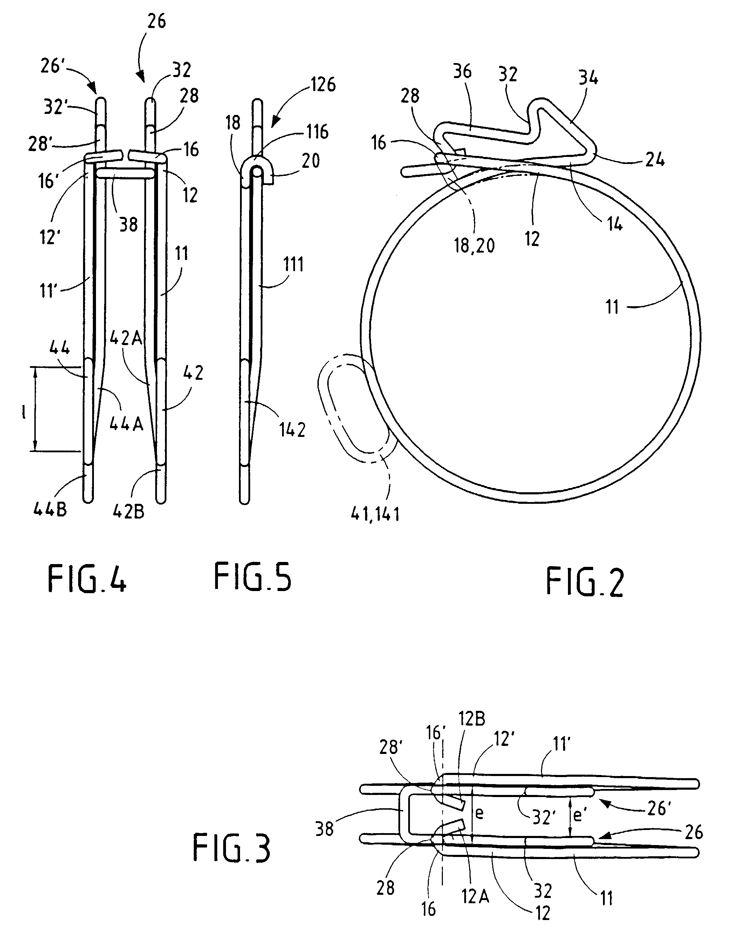

Le collier 10 des figures 1 et 2 est constitué par un fil de métal enroulé sur lui-même pour former au moins une spire 11. Comme on le voit sur les figures 3 et 4 d'une part et sur la figure 5 d'autre part, ce collier peut comporter deux spires parallèles et analogues 11 et 11', ou une seule spire 111.

La spire 11 visible sur les figures 1 et 2 a une première extrémité 12 qui est munie d'une boucle d'accrochage 16 qui, comme on le voit mieux sur la figure 3, est formée dans un pli du fil sensiblement transversale au plan de la spire. Pour favoriser la continuité de l'appui du collier sur l'objet à serrer, la boucle 16 peut être légèrement relevée radialement par rapport à la périphérie de la spire 11. Pour ce faire, comme on le voit en traits mixtes sur la figure 2 et comme le montre la figure 5, l'extrémité 12 peut comporter un premier pli radial 18 allant en s'écartant de la périphérie de la spire, suivi par la boucle 116 dirigée transversalement à cette spire, et par un deuxième pli radial 20 parallèle au pli 18 et dirigé en sens inverse, ce deuxième pli radial étant éventuellement suivi d'une portion sensiblement tangente à la périphérie du collier et dirigé dans le sens allant de l'extrémité 12 à l'extrémité 14 de la spire. Cette conformation permet de réaliser la boucle d'accrochage en saillie radiale sans créer une saillie agressive de l'extrémité libre du fil.

La deuxième extrémité 14 de la spire est, quant à elle, repliée sur elle-même dans une zone de repli 24. Au-delà de cette zone 24, un prolongement 26 se trouve au-dessus de la partie de la spire voisine de la deuxième extrémité 14, c'est-à-dire qu'il s'étend dans le sens F allant de la deuxième extrémité 14 vers la première extrémité 12 de la spire lorsque l'on parcourt la périphérie de cette dernière. Entre son extrémité 24 (la zone de repli) qui le raccorde à la spire et son extrémité libre 14A, le prolongement 26 présente un pli d'accrochage 28 formant un décrochement qui, considéré dans le sens allant de l'extrémité 24 vers l'extrémité 14A, est dirigé de manière à se rapprocher de la spire. On peut également considérer que ce décrochement 28 est formé dans un pli dirigé dans le sens G allant en se rapprochant d'un diamètre D du collier. Ce pli d'accrochage 28 est dirigé sensiblement radialement par rapport à la spire. Il se rapproche de la spire entre son extrémité 28A la plus proche de l'extrémité 24 du prolongement et son extrémité 28B la plus proche de l'extrémité libre 14A du prolongement. Au-delà de cette extrémité 28B, le prolongement présente une portion 30 qui est sensiblement parallèle à un diamètre D du collier. Ainsi, considérés ensemble, le décrochement 28 et la portion 30 présentent sensiblement la forme d'un L.

Le prolongement 26 présente également un pli de pré-accrochage 32 qui est situé entre l'extrémité 24 dudit prolongement et le pli d'accrochage 28. Ce pli de pré-accrochage 32 est sensiblement parallèle au pli d'accrochage 28, c'est-à-dire qu'il se rapproche du centre de la spire entre sa première extrémité 32A la plus proche de l'extrémité 24 du prolongement et sa deuxième extrémité 32B.

Ce pli de pré-accrochage 32 est raccordé à la spire par une première rampe 34 sensiblement rectiligne inclinée d'un angle a vers l'extrémité libre 14A du prolongement par rapport à un rayon R de la spire passant par l'extrémité 24 du prolongement. Cet angle a est de préférence compris entre 40° et 70°. Pour passer de la position d'ouverture du collier à la position de pré-accrochage, la boucle d'accrochage 16 "monte" sur la rampe 34 jusqu'à dépasser l'extrémité 32A du pli de pré-accrochage 32 et venir se caler vers l'extrémité interne (le fond) 32B de ce pli.

On voit également sur les figures 1 et 2 qu'une deuxième rampe 36 s'étend entre le pli de pré-accrochage 32 et le pli d'accrochage 28. Cette deuxième rampe est avantageusement sensiblement parallèle à la première.

Pour passer de la position d'ouverture du collier à la position de pré-accrochage, puis de cette position à la position d'accrochage, il suffit de solliciter les deux extrémités du collier dans le sens visant à diminuer le diamètre de la spire, jusqu'à ce que la boucle 16 parvienne au-delà de l'extrémité 32A du pli de pré-accrochage, puis au-delà de l'extrémité 28A du pli d'accrochage.

Selon le degré d'écrouissage de la zone de repli 24, la position naturelle du prolongement 26 peut être légèrement plus écartée de la périphérie de la spire que sa position d'accrochage. Dans ce cas, l'accrochage de la boucle 16 dans le pli d'accrochage 28 sollicite élastiquement le prolongement 26 en le rapprochant de la périphérie de la spire à partir de sa position naturelle. Du fait de cette coopération élastique, l'accrochage et l'appui du collier sur l'objet à serrer se trouvent renforcés. De plus, le pli d'accrochage étant sensiblement radial, il est légèrement incliné, c'est-à-dire que son fond 28B est plus proche du repli 24 que son sommet 28A. En d'autres termes, le passage de la boucle 16 sur le sommet 28A du pli d'accrochage correspond à un diamètre de spire très légèrement inférieur au diamètre que présente la spire lorsque la boucle 16 est accrochée dans le fond 28B du pli 28. Par conséquent, tout décrochage intempestif est évité.

Classiquement, le collier sera placé en position de pré-accrochage à l'issue de sa fabrication, ce qui permettra le transport et le stockage de plusieurs colliers sans risque d'emmêlement.

On voit sur les figures 3 et 4 que le collier des figures 1 et 2 peut être enroulé sur deux spires 11 et 11' sensiblement parallèles et analogues. Ainsi, les premières extrémités 12 et 12' de ces spires comportent chacune une boucle d'accrochage, respectivement 16 et 16'. En revanche, les deuxièmes extrémités 14 et 14' de ces spires sont repliées sur elles-mêmes pour former respectivement des prolongements 26 et 26' analogues au prolongement 26 précédemment décrit, c'est-à-dire présentant des plis d'accrochage 28, respectivement 28' et des plis de pré-accrochage 32, respectivement 32'.

Bien entendu, les boucles 16 et 16', de même que les plis 28 et 28' et que les plis 32 et 32' sont respectivement alignés selon une direction T transversale au plan des spires.

Dans les variantes des figures 3 et 4, le fil est enroulé entre une première extrémité 12A qui forme la boucle d'accrochage 16 de l'une des spires (11) et une deuxième extrémité 12B qui forme la boucle d'accrochage 16' de l'autre spire (11'). Le passage de l'une à l'autre spire se fait dans la région des extrémités libres des prolongements 26 et 26', entre lesquels le fil s'étend sensiblement transversalement au plan des spires pour former un pont 38. Les deux boucles d'accrochage sont libres transversalement au plan des spires l'une par rapport à l'autre.

De préférence, les deux boucles d'accrochage 16 et 16' sont rentrées vers l'intérieur du collier, c'est-à-dire que les extrémités libres 12A et 12B sont dirigées l'une vers l'autre, et s'étendent entre les deux prolongements 26 et 26'. Ceci présente d'une part l'avantage d'éviter que les extrémités 12A et 12B ne constituent des surfaces agressives qui risqueraient d'être manipulées par inadvertance. D'autre part, il est aisé de réaliser l'accrochage du collier à l'aide d'une pince dont un premier bras prendrait appui sur le pont 38, tandis que le deuxième bras prendrait appui sur les extrémités libres 12A et 12B. Dans ce cas, le deuxième bras est conformé de manière à guider les boucles d'accrochage 16 et 16' et à assister leur descente au fond des plis d'accrochage 28.

Dans la variante des figures 3 et 4, les prolongements des deux spires s'étendent entre les bras des deux spires qui portent les boucles d'accrochage, c'est-à-dire que l'écartement e des spires dans cette région est supérieur à l'écartement e' des spires dans la région des prolongements. En fait, l'écartement e est sensiblement égal à la somme de l'écartement e' et de l'épaisseur de chacune des spires.

Il faut noter que le pont 38 sert d'organe d'entretoisement qui détermine l'écartement e'.

Si l'on souhaite également maintenir l'écartement des spires dans une région différente de celle qui comporte le pont formé par le fil entre les spires, on peut ajouter au collier un organe d'entretoisement tel qu'une agrafe reliée à chacune des spires, dont les extrémités seraient serties autour des spires ou encliquetées sur ces dernières.

Selon la variante de la figure 6, on peut enrouler le fil continûment entre une première extrémité 212A située à l'extrémité libre du prolongement 226 de l'une (211) des spires et une deuxième extrémité 212B située à l'extrémité libre du prolongement 226' de l'autre spire (211'), cependant que les boucles d'accrochage sont formées dans un pont 240 qui s'étend entre les deux spires. Ce pont est réalisé de manière à maintenir l'écartement e supérieur à l'écartement e' pour permettre l'accrochage. Dans cette variante, si l'on souhaite protéger les extrémités libres du fil situées aux extrémités du prolongement, on peut utiliser un organe de protection 270 tel qu'une plaquette de maintien, en matière plastique ou en métal, encliquetée ou sertie sur ces extrémités libres. Une telle plaquette sert également d'organe d'entretoisement maintenant constant l'écartement des spires dans la région des extrémités libres des prolongements et ne gêne en aucune manière le serrage puisqu'elle est située dans une région du collier qui n'est pas en contact avec l'objet à serrer. De plus, une telle plaquette, compte tenu de sa géométrie, peut constituer un support de marquage du collier (désignation, diamètre...) et/ou un support de repérage par exemple par couleur d'identification. Dans cette variante, les plis d'accrochage 228 et 228' sont formés de la manière précédemment évoquée et sont précédés par des rampes rectilignes 236 et 236'. Les prolongements repliés 226 et 226' présentent des ondulations 232 et 232' qui sont alignées transversalement au collier et forment les plis de pré-accrochage par leurs faces situées du côté des plis d'accrochage.

A l'autre extrémité de chaque spire est réalisée une ondulation, respectivement 250 et 250'. Ces ondulations, par leurs faces arrières 251, 251', servent d'appui à une mâchoire d'une pince de serrage dont l'autre mâchoire peut s'appuyer sur les sommets des ondulations 232, 232' ou au-delà.

Le collier selon l'invention comporte avantageusement une réserve susceptible d'être sollicitée pour augmenter son diamètre. Dans le collier à double spire, cette réserve 41 comporte deux boucles, respectivement 42 et 44, s'enroulant en formant un "e", sensiblement dans le plan de leurs spires respectives 11 et 11', et en faisant radialement saillie par rapport à elles. Les deux boucles 42 et 44 ont la même longueur et la réserve 41 constitue en fait une réserve de longueur de fil qui peut être utilisée pour augmenter le diamètre du collier 10 lorsque ceci est nécessaire. C'est par exemple le cas lorsque l'objet inséré se dilate sous l'effet des éventuelles variations de température. La réserve peut être élastique pour accompagner ces variations de température aussi bien en rétractation (diminution du diamètre) qu'en dilatation (augmentation du diamètre). Elle peut également être mise à profit lors de l'accrochage, de manière élastique ou non, pour permettre le passage des boucles 16 et 16' dans les plis d'accrochage. La réserve peut également être constituée par une ondulation (non représentée) réalisée par pincement du fil en W. Les deux jambes des boucles, respectivement 42A et 42B pour la boucle 42, et 44A et 44B pour la boucle 44, se chevauchent avantageusement sur une longueur 1 sur laquelle elles épousent globalement la périphérie du collier. Cette longueur est déterminée de telle sorte que, quelque soit le degré d'utilisation de la réserve 40, il subsiste une portion des jambes qui épouse la périphérie du collier, de sorte que l'appui du collier sur l'objet à serrer ne subit aucune discontinuité dans la région de la réserve 40.

La présence de la réserve 41 correspond à une variante. Elle est seulement indiquée en traits mixtes sur la figure 2 et ne figure pas sur la figure 3.

La figure 5 est une vue analogue à la figure 4, qui montre un collier à une seule spire. Cette spire 111 comporte une première extrémité munie d'une boucle d'accrochage 116 et une deuxième extrémité munie d'un prolongement replié 126. A titre de variante, on a montré la boucle 116 en saillie radiale, portée par les pattes radiales 18 et 20 précédemment évoquées. Le prolongement 126 est analogue au prolongement 26 de la figure 1 et comporte donc le pli de pré-accrochage et le pli d'accrochage. La spire 111 est enroulée entre une première extrémité située à l'extrémité libre de la boucle d'accrochage et une deuxième extrémité située à l'extrémité libre du prolongement. A titre de variante, on peut doter ce collier d'une réserve 141 comportant une boucle 142 analogue aux boucles 42 et 44 précédemment évoquées en regard de la figure 4.

## Revendications

1. Collier de serrage (10) constitué par un fil semi-rigide enroulé sur lui-même pour former au moins une spire (11, 11', 111) qui a une première extrémité (12) munie d'une boucle d'accrochage (16, 16', 116, 240) formée dans un pli du fil sensiblement transversal au plan de la spire et une deuxième extrémité (14) repliée sur elle-même vers l'extérieur, pour former un prolongement (26, 26', 126, 226, 226') s'étendant sensiblement dans le plan de la spire,
caractérisé en ce que le prolongement (26, 26', 126, 226, 226') comporte un pli d'accrochage (28, 28', 228, 228') formant un décrochement qui, considéré dans le sens (F) allant vers l'extrémité libre (14A) du prolongement, est dirigé de manière à se rapprocher de la spire (11, 11', 111), et en ce que ledit prolongement comporte un pli de pré-accrochage (32, 32', 232, 232') situé entre l'extrémité (24) du prolongement raccordée à la spire et le pli d'accrochage (28, 28', 228, 228'), le pli de pré-accrochage étant également dirigé de manière à se rapprocher de la spire.

2. Collier selon la revendication 1, caractérisé en ce que le pli de pré-accrochage (32, 32') est raccordé à la spire (11, 11', 111) par une première rampe (34) sensiblement rectiligne inclinée vers l'extrémité libre (14A) du prolongement (26, 26', 126) par rapport à un rayon (R) de la spire passant par l'extrémité du prolongement raccordée à ladite spire.

3. Collier selon la revendication 1 ou 2, caractérisé en ce que le pli d'accrochage (28, 28', 228, 228') est raccordé au pli de pré-accrochage (32, 32', 232, 232') par une deuxième rampe (36, 236, 236') sensiblement rectiligne inclinée vers l'extrémité libre (14A) du prolongement par rapport à un rayon de la spire passant par l'extrémité du prolongement raccordée à ladite spire.

4. Collier selon l'une quelconque des revendications 1 à 3, caractérisé en ce que le fil est enroulé sur deux spires (11, 11') sensiblement parallèles et analogues.

5. Collier selon la revendication 4, caractérisé en ce qu'il comporte au moins un organe d'entretoisement (38, 240, 270) relié à chacune des deux spires (11, 11') et les maintenant écartées l'une de l'autre.

6. Collier selon l'une quelconque des revendications 4 et 5, caractérisé en ce que le fil est enroulé entre une première extrémité (12A) formant la boucle d'accrochage (16) de l'une des spires (11) et une deuxième extrémité (12B) formant la boucle d'accrochage (16') de l'autre spire (11') et en ce que, entre les extrémités libres des prolongements (26, 26') de chacune des spires, le fil s'étend sensiblement transversalement au plan des spires pour former un pont (38).

7. Collier selon l'une quelconque des revendications 4 et 5, caractérisé en ce que le fil est enroulé entre une première extrémité située à l'extrémité libre (212A) du prolongement (226) de l'une des spires (211) et une deuxième extrémité située à l'extrémité libre (212B) du prolongement (226') de l'autre spire (211'), cependant que les boucles d'accrochage sont formées dans un pont (240) -s'étendant entre les deux spires, l'écartement (e) des deux spires dans la région du pont formant les boucles d'accrochage étant supérieur à l'écartement (e') qu'elles présentent dans la région de leurs prolongements, pour permettre l'insertion desdits prolongements sous ledit pont.

8. Collier selon l'une quelconque des revendications 1 à 7, caractérisé en ce qu'il comporte une réserve (41, 141) susceptible d'être sollicitée pour augmenter le diamètre du collier.

9. Collier selon la revendication 8, caractérisé en ce que ladite réserve comporte une boucle (42, 44) formée dans ladite au moins une spire, s'étendant sensiblement dans le plan de cette dernière en faisant radialement saillie.

## Claims

1. A clamping collar (10) constituted by a semi-rigid wire rolled up to form at least one turn (11, 11', 111) having a first end (12) provided with a hook (16, 16', 116, 240) formed in a fold of the wire extending substantially transversely to the plane of the turn and a second end (14) that is folded back outwardly to form an extension (26, 26', 126, 226, 226') extending substantially in the same plane as the turn,
characterized in that the extension (26, 26', 126, 226, 226') includes a fastening fold (28, 28', 228, 228') forming a setback which, when considered in the direction (F) going towards the free end (14A) of the extension, is directed so as to come closer to the turn (11, 11', 111), and in that said extension includes a pre-fastening fold (32, 32', 232, 232') situated between the end (24) of the extension where it is connected to the turn, and the fastening fold (28, 28', 228, 228') thereof, the pre-fastening fold being likewise directed in such a way as to come closer to the turn.

2. A collar according to claim 1, characterized in that the pre-fastening fold (32, 32') is connected to the turn (11, 11', 111) via a first substantially rectilinear ramp (34) sloping towards the free end (14A) of the extension (26, 26', 126) relative to a radius (R) of the turn passing through that end of the extension which is connected to said turn.

3. A collar according to claim 1 or 2, characterized in that the fastening fold (28, 28', 228, 228') is connected to the pre-fastening fold (32, 32', 232, 232') via a second substantially rectilinear ramp (36, 236, 236') inclined towards the free end (14A) of the extension relative to a radius of the turn passing through that end of the extension which is connected to said turn.

4. A collar according to any one of claims 1 to 3, characterized in that the wire is wound around two turns (11, 11') that are substantially parallel and similar.

5. A collar according to claim 4, characterized in that it includes at least one spacer member (38, 240, 270) connected to each of the two turns (11, 11') and holding them spaced apart from each other.

6. A collar according to claim 4 or 5, characterized in that the wire is wound between a first end (12A) forming the hook (16) of one of the turns (11) and a second end (12B) forming the hook (16') of the other turn (11'), and in that between the free ends of the extensions (26, 26') of the two turns, the wire extends substantially transversely to the plane of the turns, to form a bridge (38).

7. A collar according to claim 4 or 5, characterized in that the wire is wound from a first end situated at the free end (212A) of the extension (226) of one of the turns (211) to a second end situated at the free end (212B) of the extension (226') of the other turn (211'), with the hooks being formed in a bridge (240) extending between the two turns, the spacing (e) of the two turns in the region of the hook-forming bridge being greater than the spacing (e') between the turns in the region of their extensions, to enable said extensions to be inserted beneath said bridge.

8. A collar according to any one of claims 1 to 7, characterized in that it includes extra wire (41, 141) suitable for being drawn upon to increase the diameter of the collar.

9. A collar according to claim 8, characterized in that said extra wire is in the form of a loop (42, 44) formed in said at least one turn, extending substantially in the same plane as the turn, and projecting radially outwards therefrom.

## Patentansprüche

1. Schlauchklemme (10) bestehend aus einem halbstarren Draht, der zur Bildung mindestens einer Windung (11, 11', 111) aufgerollt ist, welche ein erstes Ende (12), das mit einer in einer zur Ebene der Windung im Wesentlichen querlaufenden Faltung des Drahts ausgebildeten Verhakungsschleife (16, 16', 116, 240) versehen ist, und ein zweites Ende (14) aufweist, das zur Bildung einer sich im Wesentlichen in der Ebene der Windung erstreckenden Verlängerung (26, 26', 126, 226, 226') nach außen hin umgebogen ist, dadurch gekennzeichnet, dass die Verlängerung (26, 26', 126, 226, 226') eine Verhakungsfaltung (28, 28', 228, 228') aufweist, welche einen Absatz bildet, der in Richtung (F) zum freien Ende (14A) der Verlängerung hin betrachtet derart gerichtet ist, dass er sich der Windung (11, 11', 111) nähert, und dass die Verlängerung eine Vorverhakungsfaltung (32, 32', 232, 232') aufweist, die zwischen dem Ende (24) der an die Windung anschließenden Verlängerung und der Verhakungsfaltung (28, 28', 228, 228') liegt, wobei die Vorverhakungsfaltung ebenfalls so gerichtet ist, dass sie sich der Windung nähert.

2. Schlauchklemme nach Anspruch 1, dadurch gekennzeichnet, dass die Vorverhakungsfaltung (32, 32') an die Windung (11, 11', 111) über eine im Wesentlichen geradlinige erste Rampe (34) anschließt, welche in Bezug auf einen Radius (R) der Windung, der durch das an die Windung anschließende Ende der Verlängerung (26, 26', 126) verläuft, zum freien Ende (14A) der Verlängerung hin geneigt ist.

3. Schlauchklemme nach Anspruch 1 oder 2, dadurch gekennzeichnet, dass die Verhakungsfaltung (28, 28', 228, 228') an die Vorverhakungsfaltung (32, 32', 232, 232') über eine im Wesentlichen geradlinige zweite Rampe (36, 236, 236') anschließt, welche in Bezug auf einen Radius der Windung, der durch das an die Windung anschließende Ende der Verlängerung verläuft, zum freien Ende (14A) der Verlängerung hin geneigt ist.

4. Schlauchklemme nach einem der Ansprüche 1 bis 3, dadurch gekennzeichnet, dass der Draht in zwei im Wesentlichen parallelen und analogen Windungen (11, 11') aufgerollt ist.

5. Schlauchklemme nach Anspruch 4, dadurch gekennzeichnet, dass sie mindestens ein Verstrebungselement (38, 240,270) aufweist, welches mit jeder der beiden Windungen (11, 11') verbunden ist und diese voneinander im Abstand hält.

6. Schlauchklemme nach einem der Ansprüche 4 und 5, dadurch gekennzeichnet, dass der Draht zwischen einem ersten Ende (12A), das die Verhakungsschleife (16) einer der Windungen (11) bildet, und einem zweiten Ende (12B), das die Verhakungsschleife (16') der anderen Windung (11') bildet, aufgerollt ist und dass sich der Draht zwecks Bildung einer Brücke (38) zwischen den freien Enden der Verlängerungen (26, 26') jeder Windung im Wesentlichen quer zur Ebene der Windungen erstreckt.

7. Schlauchklemme nach einem der Ansprüche 4 und 5, dadurch gekennzeichnet, dass der Draht zwischen einem ersten Ende, das sich am freien Ende (212A) der Verlängerung (226) einer der Windungen (211) befindet, und einem zweiten Ende, das sich am freien Ende (212B) der Verlängerung (226') der anderen Windung (211') befindet, aufgerollt ist, wobei die Verhakungsschleifen in einer sich zwischen den beiden Windungen erstreckenden Brücke (240) ausgebildet sind und wobei der Abstand (e) der beiden Windungen im Bereich der die Verhakungsschleifen bildenden Brücke größer als der Abstand (e') ist, den sie im Bereich ihrer Verlängerungen aufweisen, um die Einführung der Verlängerungen unter der Brücke zu ermöglichen.

8. Schlauchklemme nach einem der Ansprüche 1 bis 7, dadurch gekennzeichnet, dass sie eine Reserve (41, 141) aufweist, die zur Vergrößerung des Durchmessers der Schlauchklemme heranziehbar ist.

9. Schlauchklemme nach Anspruch 8, dadurch gekennzeichnet, dass die Reserve eine Schleife (42, 44) aufweist, die in der mindestens einen Windung ausgebildet ist und sich im Wesentlichen in der Ebene derselben erstreckt, indem sie radial vorsteht.
